# EUROPÄISCHE PATENTANMELDUNG

(11) **EP 0 693 532 A2**
(43) Veröffentlichungstag der Anmeldung: **24.01.1996**
(21) Anmeldenummer: 95110900.8
(22) Anmeldetag: 12.07.1995
(51) Int. Cl.: C08L 77/00

(54) **Recyclierte Polyamidformmassen für Blasformanwendungen**

(30) Priorität: 20.07.1994 DE 4425615
(71) Anmelder: BASF AKTIENGESELLSCHAFT, D-67056 Ludwigshafen (DE)
(72) Erfinder: Götz, Walter, Dr., D-67067 Ludwigshafen (DE); Pellkofer, Erich, D-67112 Mutterstadt (DE); Lohrbächer, Volker, D-69469 Weinheim (DE)

(57) **Zusammenfassung**

Die Erfindung betrifft thermoplastische Formmassen, enthaltend
A) 40 bis 99,9 Gew.-% eines faserverstärkten Polyamid-6-Recyclats mit einer Viskositätszahl ≧ 200 ml/g
B) 0,1 bis 5 Gew.-% eines Olefinpolymerisates, aufgebaut aus
   b₁) 40 - 99,8 Gew.-% mindestens eines α-Olefins mit 2 - 8 C-Atomen,
   b₂) 0,2 - 20 Gew.-% einer ethylenisch ungesättigten Mono- oder Dicarbonsäure oder einem funktionellen Derivat einer solchen Säure,
C) 0 bis 50 Gew.-% eines unverstärkten Polyamid-Recyclats
D) 0 bis 50 Gew.-% eines nicht-recyclisierten Polyamids
E) 0 - 10 Gew.-% eines nicht-recyclierten faserförmigen Füllstoffes
F) 0 - 30 Gew.-% üblicher Zusatzstoffe und Verarbeitungshilsmittel,
wobei die Gewichtsprozente der Komponenten A) bis F) sich zu 100 % ergänzen, mit der Maßgabe, daß der Fasergehalt der Formmassen insgesamt 10 bis 50 Gew.-%, bezogen auf A) bis F), beträgt und maximal 1/5 des Fasergehaltes der Formmassen A) bis F) aus nicht-recycliertem Füllstoff E) besteht.

## Beschreibung

Die Erfindung betrifft thermoplastische Formmassen, enthaltend
A) 40 bis 99,9 Gew.-% eines faserverstärkten Polyamid-6-Recyclats mit einer Viskositätszahl ≧ 200 ml/g
B) 0,1 bis 5 Gew.-% eines Olefinpolymerisates, aufgebaut aus
   b₁) 40 - 99,8 Gew.-% mindestens eines α-Olefins mit 2 - 8 C-Atomen,
   b₂) 0,2 - 20 Gew.-% einer ethylenisch ungesättigten Mono- oder Dicarbonsäure oder einem funktionellen Derivat einer solchen Säure,
C) 0 bis 50 Gew.-% eines unverstärkten Polyamid-Recyclats
D) 0 bis 50 Gew.-% eines nicht-recyclisierten Polyamids
E) 0 - 10 Gew.-% eines nicht-recyclierten faserförmigen Füllstoffes
F) 0 - 30 Gew.-% üblicher Zusatzstoffe und Verarbeitungshilsmittel,
wobei die Gewichtsprozente der Komponenten A) bis F) sich zu 100 % ergänzen, mit der Maßgabe, daß der Fasergehalt der Formmassen insgesamt 10 bis 50 Gew.-%, bezogen auf A) bis F), beträgt und maximal 1/5 des Fasergehaltes der Formmassen A) bis F) aus nicht-recycliertem Füllstoff E) besteht.

Weiterhin betrifft die Erfindung Verfahren zur Herstellung der erfindungsgemäßen Formmassen sowie die Verwendung derartiger Formmassen zur Herstellung von Formkörpern durch Blasformen, Profilextrusion und Rohrextrusion sowie die hierbei erhältlichen Formkörper.

Polyamide sind eine Klasse von technischen Werkstoffen, die in vielen Bereichen Anwendung finden, da sie ein insgesamt interessantes Eigenschaftsspektrum aufweisen. Zähmodifizierte Polyamide mit Ethylencopolymeren sind u.a. aus der EP-A 279 578; glasfaserhaltige Formmassen sind aus der DE-A 27 03 416 bekannt, welche Ethylen- oder Propylenhomopolymere enthalten, die mit ungesättigten Säuren gepfropft sind.

Die bekannten zähmodifizierten Polyamide lassen sich aber nur bedingt zu Blasformkörpern verarbeiten. Beim Blasformen wird allgemein ein Schlauch aus Polymerschmelze extrudiert, der zwischen den beiden Halbschalen des geöffneten Werkzeuges hängt. Anschließend wird das Werkzeug geschlossen und der Polymerschlauch durch Gas-Innendruck gegen das Werkzeug gepreßt, abgekühlt und entformt.

Wesentliche Voraussetzung bei dieser Verarbeitung ist, daß der Polymerschlauch beim Extrudieren in den Zeiträumen, wo er frei zwischen den Werkzeugen hängt, nicht abreißt, so daß der Formungsvorgang zu Ende geführt werden kann. Je nach Eigenschaften der Polymerschmelze ist die ohne Abriß extrudierbare Menge (Länge) des Schlauches durch das Volumen des herstellbaren Formkörpers begrenzt. Wünschenswert ist darüberhinaus auch, daß der Schlauch nicht "durchhängt", da hierbei geringe Wandstärken in der oberen Hälfte und dickere Wandstärken in der unteren Hälfte entstehen. Hohlkörper mit stark unterschiedlichen Wandstärken sind zur Verwendung nicht geeignet, da die Belastbarkeit in der Regel von der Stelle mit der geringsten Wandstärke begrenzt wird. Die aus der JP-A 62/252 453 und WO-A 90/7549 bekannten Formmassen eignen sich daher nur sehr beschränkt für das Blasformverfahren, da die Schlauchfestigkeit zu gering ist.

Besonders problematisch ist die Gefahr eines Schmelzebruchs bzw. Durchhängens bei glasfaserverstärkten Polymerschmelzen, da diese eine hohe Dichte (und dadurch eine hohe Zugkraft auf den oberen Teil des Polymerschlauches) aufweisen und gleichzeitig die maximale Dehnbarkeit der Polymerschmelze bis zum Bruch bei diesen verstärkten Massen geringer ist als bei unverstärkten Polymeren.

Beide Faktoren werden von der sog. Schmelzesteifigkeit, die in erster Linie von der Schmelzeviskosität abhängt, bestimmt. Ideal wäre eine hohe Schmelzviskosität bei geringer Scherung - d.h. nach der Extrusion - aber eine niedrige Schmelzviskosität unter hohem Schergefälle - d.h. im Verarbeitungsextruder.

Folglich werden zum Blasformen üblicherweise hochmolekulare Polyamide eingesetzt wie aus der DE-A-38 31 243 und JP-A 60/171 133 bekannt.

Das Konfektionieren hochmolekularer Polyamide mit Glasfasern ist deshalb problematisch, da beim Konfektionieren ein hoher Molekulargewichtsabbau eintritt.

Die EP-A 589 349 offenbart Blasformmassen aus Polyamiden, Glasfasern und geringe Mengen säuremodifizierter Kautschuke, wobei die Mischungen in fester Phase auf das gewünschte höhere Molekulargewicht des Polyamids nachkondensiert werden. Damit wird die Probematik des Molekulargewichtsabbaus beim Konfektionieren hochmolekularer Polyamide mit Glasfasern vermieden.

Bei allen genannten Patenten werden Glasfasern, soweit überhaupt verwendet, als konventionelle Endlosfasern (Rovings) oder Schnittfasern (4-6 mm lange Faserbündel) eingesetzt. Durch Scherung im Extruder ergibt sich dann die Glasfaserlängenverteilung im Produkt, die zwar nirgends erwähnt ist, bei üblicher Verarbeitung aber bei ca. 250-300 µm liegt (bezogen auf ein Produkt mit 25 % Glasfasergehalt). Dabei ist zu berücksichtigen, daß die mittlere Faserlänge (bei gegebener Verarbeitung) im allgemeinen mit zunehmendem Faseranteil sinkt, da es zu erhöhten Faser-Faser-Wechselwirkungen in der Einarbeitungszone und damit zu vermehrtem Faserbruch kommt (F. Ramsteiner, R. Theysohn, Comp. Sci. Techn. 23 (1985) 231).

Bei der Verarbeitung fallen zwangsläufig Abfälle an, die normalerweise in Mengen bis zu 30 % der sog. "Frischware" zugesetzt werden können, ohne die Eigenschaften allzusehr zu beeinträchtigen. Beim Blasformen fallen besonders viele Abfälle an, da der extrudierte Schlauch im Werkzeug abgequetscht wird und die über die gewünschte Form hinausragenden Teile, vor allem oben und unten, entfernt werden. Diese können bei komplizierten Geometrien mehr als das eigentliche Formgewicht darstellen.

Da bei Abfallprodukten die Glasfaserlänge durch erneute Verarbeitung z.B. Konfektionierung weiter reduziert wird, wirken sich höhere Gehalte an Recyclaten bei der Spritzgußverarbeitung nachteilig auf die mechanischen Eigenschaften der hierbei erhältlichen Formkörper aus. Im Normalfall geht man bei Spritzgußprodukten höchstens einen Kompromiß zwischen mechanischen Eigenschaften (steigen mit der Faserlänge) und wirtschaftlichen Interessen ein, fordert aber meist eine möglichst hohe Faserlänge.

Aufgabe der vorliegenden Erfindung war es daher, faserverstärkte Polyamidformmassen auf Basis von Recyclaten zur Verfügung zu stellen, die trotz der geringeren Faserlänge und doppelten thermischen Belastung des Polymers zu Formkörpern führen, die eine geringfügige Verschlechterung der mechanischen Eigenschaften zeigen bei gleichzeitig verbesserter Verarbeitbarkeit im Blasformverfahren, speziell die Herstellbarkeit von großen Formteilen mit gleichmäßiger Wanddickenverteilung. Insbesondere sollten die Formmassen möglichst hohe Anteile an recyclierten Polyamiden enthalten.

Demgemäß wurden die eingangs definierten thermoplastischen Polyamidformmassen gefunden.

Bevorzugte Ausführungsformen sind den Unteransprüchen zu entnehmen.

Überraschenderweise führen die kurzen Glasfasern im Produkt zu einem - mäßigen, aber vertretbaren - Rückgang der mechanischen Eigenschaften (Steifigkeit, Festigkeit) aber zu einer deutlich verbesserten Verarbeitbarkeit beim Blasformen. Dies steht im Widerspruch zur normalen Spritzgußverarbeitung, wo in diesem Bereich der Faserlänge keine nennenswerte Veränderung der Verarbeitbarkeit festgestellt wird .

Überraschenderweise sind trotz der wiederholten thermischen Belastung des Polymers die Verarbeitungseigenschaften des auf Recyclat basierenden Produktes besser bzw. unverändert im Vergleich zu nicht-recyclierten Produkten.

Als Komponente A) enthalten die erfindungsgemäßen Formmassen 40 bis 99,9, vorzugsweise 70 bis 99,5 und insbesondere 80 bis 99,3 Gew.-% eines faserverstärkten Polyamid-6-Recyclats mit einer Viskositätszahl ≧ 200 ml/g, vorzugsweise ≧ 220 ml/g und insbesondere ≧ 250 ml/g. Diese werden üblicherweise nach ISO 307 oder DIN 53727 an 0,5 gew.-%igen Lösungen bei 96 gew.-%iger Schwefelsäure bei 25°C bestimmt.

Verfahren zur Herstellung von PA 6 sind dem Fachmann bekannt, so daß sich weitere Angaben hierzu erübrigen. Unter Recyclat sollen erfindungsgemäß Produktionsabfälle bei der Verarbeitung verstanden werden, die bei Spritzgießen, Extrudieren oder Blasformen durch sog. Angüsse, nicht granulierte Stränge oder Anfahren des Extruders usw. entstehen. Es können auch Altteile, d.h. gebrauchte Spritzguß- oder Blasteile ("post-consumer-scrap") hierbei verwendet werden. Es versteht sich von selbst, daß diese Recyclate unterschiedliche Molekulargewichte, d.h. Viskositätszahlen aufweisen können, wobei es jedoch wesentlich für die Blasformanwendung der erfindungsgemäßen Polyamidformmassen ist, daß nach der Herstellung der Mischung das Polyamid-6-Recyclat eine Viskositätszahl ≧ 200 ml aufweist, z.B. durch Mischen von Extrusionsabfällen (mit meist geringerere Viskositätszahlen) mit hochmolekularen Blasformresten (größtenteils mit Viskositätszahlen über 250 ml/g).

Derartige faserverstärkte PA 6-Recyclate enthalten üblicherweise 10 bis 60 Gew.-% (bezogen auf 100 Gew.-% A), bevorzugt 15 bis 50 und insbesondere 25 bis 35 Gew.-% an faserförmigen Füllstoffen. Als faserförmige Füllstoffe seien hierfür nur beispielsweise Kohlenfasern, Aramid-Fasern, Kaliumtitanat-Fasern und faserförmige Silikate wie Wollastonit genannt, wobei Glasfasern als E-Glas bevorzugt sind.

Bei der Verwendung von Glasfasern können diese zur besseren Verträglichkeit mit dem thermoplastischen Polyamid mit einer Schlichte und einem Haftvermittler, bevorzugt einem Aminosilan, ausgerüstet sein.

Der Fasergehalt der Komponente A) sowie der gesamten Mischung wird üblicherweise bestimmt, indem man die Polymerbestandteile verascht.

Wesentlich ist, daß bei höheren oder niederen Fasergehalten der Polyamid-6-Recyclate, z.B. wie vorstehend beschrieben bis zu 60 Gew.-%, die Formmassen einen Glasfasergehalt insgesamt von 10 bis 50, vorzugsweise von 15 bis 35 und insbesondere von 20 bis 25 Gew.-% (bezogen auf das Gesamtgewicht der Komponenten A bis F), aufweisen. Hierzu kann es erforderlich sein, daß Polyamid 6-Recyclate mit unterschiedlichem Fasergehalt derart gemischt werden, daß der vorstehend genannte Fasergehalt der Mischung innerhalb der genannten Mengenbereiche liegt. Eine andere Möglichkeit besteht auch darin, bei zu hohem Glasfasergehalt, unverstärktes Polyamid-Recyclat oder nicht-recycliertes Polyamid zuzusetzen. Umgekehrt kann es bei zu geringem Fasergehalt erforderlich sein, nicht recyclierte Fasern zuzusetzen, wobei es wesentlich ist, daß maximal 1/5, bevorzugt maximal 1/10 des Fasergehaltes der Formmassen A) bis F) aus nicht-recycliertem faserförmigen Füllstoff besteht.

Der in den Polyamid-6-Recyclaten enthaltende faserförmige Füllstoff weist in der Regel eine Faserlänge (arith. Mittel) von <200 µm, bevorzugt < 180 µm und insbesondere von <150µm auf.

Die Faserlänge wird üblicherweise als arithmetischer Mittelwert bestimmt, in dem man z.B. eine konstante Menge der Polyamidmischung verascht, den Rückstand in Silikonöl aufnimmt und die Emulsion bei 20facher Vergrößerung des Mikroskopes fotografiert. Auf den Bildern werden anschließend mindestens 500 Fasern mit Hilfe eines Digitalisierungstabletts von Hand ausgezählt und rechnerisch der arithmetische Mittelwert der Faserlänge bestimmt.

Der Anteil der Olefinpolymerisate B) in den Formmassen beträgt 0,1 bis 5, vorzugsweise 0,5 bis 5 und insbesondere 0,7 bis 2,5 Gew.-%.

Diese sind aufgebaut aus:
b₁) 40 - 99,8, vorzugsweise 60 - 99 Gew.-% mindestens eines α-Olefins mit 2 - 8 C-Atomen,
b₂) 0,2 bis 20, vorzugsweise 1 - 10 Gew.-% einer ethylenisch ungesättigten Mono- oder Dicarbonsäure oder einem funktionellen Derivat einer solchen Säure.

Als geeignete α-Olefine b₁) seien geradkettige oder verzweigte Butene, Pentene, Hexene, Heptene, Octene genannt, wobei Ethylen und Propylen bevorzugt sind.

Geeignete Monomere b₂) sind Maleinsäure, Fumarsäure, Acrylsäure, Methacrylsäure, Itaconsäure oder deren funktionelle (reaktive) Derivate wie Anhydride oder Säureazide, wobei Maleinsäureanhydrid und Acrylsäure bevorzugt sind.

Die Olefinpolymerisate können darüberhinaus bis zu 50 Gew.-%, vorzugsweise bis zu 30 Gew.-% weiterer Monomere b₃) enthalten.

Beispiele für derartige Monomere, die unter den Verarbeitungsbedingungen keine Reaktion mit dem Polyamid eingehen, sind Acrylsäureester mit 4 bis 22 C-Atomen wie Methylacrylat, Methylmethacrylat, Butylacrylat, Ethylhexylacrylat, Cyclohexylacrylat und Ethylacrylat.

Vinylester von Säuren mit 1 bis 20 C-Atomen wie Vinylacetat oder Vinylpropionat, Vinylether mit 3 bis 20 C-Atomen wie Vinylbutylether, wobei Methacrylat und Butylacrylat bevorzugt sind.

Bevorzugt sind Olefinpolymerisate, welche keine Monomere b₃) enthalten.

Bevorzugte Olefinpolymerisate sind Ethylenco- oder pfropfpolymerisate mit Acrylsäure oder Polymerisate aus Polypropylen sowie Ethylen-Propylencopolymerisate, welche mit Acrylsäure oder Maleinsäureanhydrid gepfropft sind.

Die Herstellung der vorstehend beschriebenen Olefinpolymerisate kann nach an sich bekannten Verfahren erfolgen, welche in der Literatur beschrieben sind.

Der Schmelzindex der Olefinpolymerisate liegt im allgemeinen von 1 bis 100 g/10 min, vorzugsweise 5 bis 25 g/10 min (gemessen bei 190°C und 2,16 kg Belastung).

Bevorzugte Olefinpolymerisate weisen ein Zug-E-Modul gemäß ISO 527 von ≧ 130, bevorzugt ≧ 150 MPA auf.

Selbstverständlich können auch Mischungen der vorstehenden Olefinpolymerisate eingesetzt werden.

In den Polyamid-6-Recyclaten (Komponente A) können bereits geringe Mengen der Komponente B) vorhanden sein, insbesondere wenn es sich um Abfälle aus der Blasformproduktion handelt. Andernfalls muß die Komponente B) in der notwendigen Menge eingemischt werden. Wesentlich ist, daß der Gesamtgehalt des Kautschuks B) in den erfindungsgemäßen Formmassen (bezogen auf die Komponenten A) bis F) 5 Gew.-% nicht übersteigt.

Der Anteil des Kautschukes B) wird üblicherweise durch Hydrolyse in 20%iger Salzsäure bestimmt. Hierbei fallen der Kautschuk und die Fasern als unlösliche Rückstände an, während das Polyamid vollständig gelöst wird. Der Mengenanteil des unlöslichen Rückstandes (auch Gelgehalt genannt) kann anschließend vom durch Veraschung ermittelten Gehalt an Fasern substrahiert werden.

Die verwendbaren unverstärkten Polyamid-Recyclate C) sind an sich bekannt. Beispiele hierfür sind Polyhexamethylenadipinsäureamid, Polyhexamethylenpimelinsäureamid, Polyhexamethylenkorksäureamid, Polyhexamethylenazelainsäureamid, Polyhexamethylensebacinsäureamid, Polyhexamethylendodekandisäureamid, Polyoctamethylenkorksäureamid, Polydodekamethylendodekandisäureamid, Poly-11-aminoundekansäureamid und Bis-(4-aminocyclohexyl)-methandodekansäureamid oder die durch Ringöffnung von Lactamen, z.B. Polycaprolactam oder Polylaurinlactam, erhaltenen Produkte. Auch Polyamide auf der Basis von Terephthal- oder Isophthalsäure als Säurekomponente und/oder Trimethylhexamethylendiamin, Bis-(4-aminocyclohexyl)-methan oder 2,2-Di-(4-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet. Als Beispiel hierfür seien Copolykondensate aus Terephthalsäure, Hexamethylendiamin und Caprolactam (PA 6/6T) genannt, sowie aus Terephthalsäure, Isophthalsäure, Adipinsäure und Hexamethylendiamin (PA 6T/6I/66).

Vorzugsweise setzt man teilkristalline Polyamide ein, bevorzugt PA 6, PA 66 sowie deren Copolymerisate, 6T/6, 6T/66, 6T/6I, 6T/6I/66 (Copolykondensate aus Hexamethylendiamin, Adipinsäure, Caprolactam und Iso- bzw. Terephthalsäure) sowie PA 46.

Die Herstellung dieser Polyamide erfolgt in an sich bekannter Weise (s. z.B. Encyclopedia of Polymer Science and Engineering, Vol. 11, S. 315 bis 489, John Wiley & Sons, Inc. 1988.

Das Verhältnis von endständigen Säuregruppen zu endständigen Aminogruppen kann durch Variation des Molverhältnisses der Ausgangsverbindungen gesteuert werden.

Die Viskositätszahl VZ der unverstärkten Polyamid-Recyclate beträgt von 130 bis 300 ml/g, bevorzugt 135-280 ml/g . Diese werden üblicherweise nach ISO 307 oder DIN 53 727 an 0,5 gew.-%igen Lösungen in 96 gew.-%iger Schwefelsäure bei 25°C bestimmt.

Der Anteil der unverstärkten Polyamid-Recyclate in den Formmassen beträgt 0 bis 50, vorzugsweise 0 bis 20 und insbesondere 0 bis 10 Gew.-%.

Es können auch Mischungen verschiedener Polyamide eingesetzt werden.

Unter unverstärkten Polyamid-Recyclaten im Sinne der Erfindung sollen auch solche Recyclate verstanden werden, die bis zu 2 Gew.-%, bezogen auf C) Feststoffgehalt aufweisen, d.h. Pigmente, Nukleierungsmittel und sonstige üblicher Verarbeitungshilfsmittel. Beispielhaft seien Polyamid-Recyclate erwähnt, die als Abfälle bei der Faserherstellung anfallen und im allgemeinen bis zu 2 Gew.-% Titandioxid als Pigment enthalten.

Als Komponente D) können die erfindungsgemäßen Formmassen 0 bis 50, bevorzugt bis zu 20 Gew.-% eines nicht-recyclierten Polyamids enthalten, welche vorstehend beim Aufbau der Komponente C) bereits beschrieben wurden.

Bevorzugt sind erfindungsgemäße Formmassen, welche keine Komponente D) enthalten, da möglichst große Mengen aus Recyclaten bestehen sollen. Es kann jedoch sein, wie bereits vorstehend ausgeführt, daß sog. frisches Polyamid zugegeben wird, damit der erforderliche Glasfasergehalt bzw. die erforderliche Viskositätszahl ≧ 200 ml/g in den Formmassen erreicht wird.

Als Komponente E) können die erfindungsgemäßen Formmassen 0 bis 10, vorzugsweise 0 bis 5 Gew.-% eines nicht-recyclierten faserförmigen Füllstoffes oder Mischungen solcher Füllstoffe enthalten.

Als faserförmige Füllstoffe seien hier nur beispielsweise Glasfasern, Kohlenstoffasern, Aramid-Fasern, Kaliumtitanat-Fasern und faserförmige Silikate wie Wollastonit genannt, bevorzugt Glasfasern.

Bei der Verwendung von Glasfasern können diese zur besseren Verträglichkeit mit dem thermoplastischen Polyamid mit einer Schlichte und einem Haftvermittler, bevorzugt einem Aminosilan, ausgerüstet sein.

Im allgemeinen haben die verwendeten Glasfasern einen Durchmesser im Bereich von 6 bis 20 µm. Die Einarbeitung kann sowohl in Form von Kurzglasfasern (Schnittglas) als auch in Form von Endlossträngen (Rovings) erfolgen. Im fertigen Spritzgußteil liegt die mittlere Länge der Glasfasern vorzugsweise im Bereich von 0,08 bis 5 mm.

Neben den wesentlichen Komponenten A) und B) sowie gegebenenfalls C) bis E) können die erfindungsgemäßen Formmassen übliche Zusatzstoffe und Verarbeitungshilfsmittel F) enthalten. Deren Anteil beträgt in der Regel bis zu 30 Gew.-% vorzugsweise bis zu 10 Gew.-%, bezogen auf das Gesamtgewicht der Komponenten A) bis F).

Übliche Zusatzstoffe sind beispielsweise Stabilisatoren und Oxidationsverögerer, Mittel gegen Wärmezersetzung und Zersetzung durch ultraviolettes Licht, Gleit- und Entformungsmittel, Farbstoffe, Pigmente, Weichmacher und Flammschutzmittel.

Oxidationsverzögerer und Wärmestabilisatoren, die den thermoplastischen Massen gemäß der Erfindung zugesetzt werden können, sind z.B. Halogenide, ausgewählt aus der Gruppe von Metallen der Gruppe I des Periodensystems, z.B. Lithium-, Natrium-, Kalium-Halogenide, und Kupfer-(I)-Halogenide, z.B. Chloride, Bromide oder Iodide, oder Mischungen davon. Weiterhin kann man Zinkfluorid und Zinkchlorid verwenden. Ferner kann man sterisch gehinderte Phenole, sekundäre, aromatische Amine, Hydrochinone, substituierte Vertreter dieser Gruppe und Mischungen dieser Verbindungen, vorzugsweise in Konzentration bis zu 1 Gew.-%, bezogen auf das Gewicht der Mischung, einsetzen.

Beispiele für UV-Stabilisatoren sind substituierte Resorcine, sterisch gehinderte Phenole, Salicylate, Benzotriazole und Benzophenone, die man im allgemeinen in Mengen bis zu 2 Gew.-% einsetzen kann.

Gleit- und Entformungsmittel, die man in der Regel bis zu 1 Gew.-% der thermoplastischen Masse zusetzen kann, sind beispielsweise Stearinsäure, Stearylalkohol, Stearinsäurealkylester und -amide sowie Ester des Pentaerythrits mit langkettigen Fettsäuren.

Als Flammschutzmittel kann man beispielsweise roten oder schwarzen Phosphor oder eine phosphorhaltige Verbindung in Mengen von 3 bis 10 Gew.-% einsetzen.

Bevorzugtes Flammschutzmittel ist elementarer Phosphor, in Kombination mit glasfaserverstärkten Formmassen.

Weitere bevorzugte Flammschutzmittel sind organische Phosphorverbindungen wie die Ester der Phosphorsäure, phosphorigen Säure und von Phosphon- und Phosphinsäure sowie tertiäre Phosphine und Phosphinoxide. Als Beispiel sei Triphenylphosphinoxid genannt. Dieses kann allein oder vermischt mit Hexabrombenzol oder einem chlorierten Biphenyl und, wahlweise, Antimontrioxid verwendet werden.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureamide, Phosphinsäureamide, Tris-(aziridinyl)-phosphinoxid oder Tetrakis-(hydroxymethyl)-phosphoniumchlorid.

Die Herstellung der erfindungsgemäß verwendbaren Formmassen kann nach an sich bekannten Verfahren erfolgen. Bevorzugt erfolgt die Herstellung, in dem man zunächst die Komponente A sowie gegebenenfalls C) und/oder D) auf eine Partikelgröße (auch als Korngröße bezeichnet, d₅₀-Wert aus Siebanalyse von 1 bis 10, bevorzugt von 3 bis 6 mm zerkleinert. Bevorzugt sollte nach Zerkleinern (z.B. durch Mahlen auf Kugelmühlen etc.) der Staubfeinanteil entfernt werden, da dieser eine zu große spezifische Oberfläche aufweist und schnell Feuchtigkeit aufnimmt. Der Staubfeinanteil besteht aus Teilchen, die kleiner als 100 µm sind und sollte nicht mehr als 0,1 Gew.-%, bezogen auf die Komponente A) sowie gegebenenfalls C) und/oder D) betragen.

Anschließend werden gegebenenfalls die Komponenten B)-F) der Komponente A)in üblicher Weise durch Schmelzkonfektionierung zugemischt.

Zweckmäßigerweise verwendet man hierzu Extruder, z.B. Einschnecken-oder Zweischneckenextruder oder andere herkömmliche Plastifizierungsvorrichtungen wie Brabender-Mühlen oder Banbury-Mühlen.

Werden höhere Molekulargewichte bzw. Viskositätszahlen des Polyamids gewünscht, unterwirft man die Kunststoffmischungen danach in der Regel einer weiteren thermischen Behandlung (Nachkondensation in fester Phase). In Temperaggregaten wie z.B. einem Taumler-Mischer oder kontinuierlich oder diskontinuierlich betriebenen Temperrohren tempert man die in der jeweiligen Bearbeitungsform vorliegende Formmasse, bis die Viskositätszahl des Polyamids die gewünschte VZ von ≧ 200 ml/g und darüber erreicht. Der Temperaturbereich der Temperung hängt vom Schmelzpunkt der reinen Komponente A) ab. Bevorzugte Temperaturbereiche sind 5 bis 50, vorzugsweise 20 bis 30°C unterhalb des jeweiligen Schmelzpunkts von A). Das erfindungsgemäße Verfahren erfolgt vorzugsweise in einer Inertgasatmosphäre, wobei Stickstoff oder überhitzter Wasserdampf als Inertgase bevorzugt sind.

Die Verweilzeiten betragen im allgemeinen von 0,5 bis 50, vorzugsweise 4 bis 20 Stunden. Die Temperung bietet keine Probleme, da das eingesetzte Olefinpolymerisat den Molekulargewichtsaufbau des Polyamids nicht behindert. Anschließend werden aus den Formmassen mittels üblicher Vorrichtungen für das Blasformen, Profilextrusion und Rohrextrusion Formteile hergestellt.

Die Schmelzviskosität der Formmassen ist soweit erhöht, daß sich glasfaserhaltige Formkörper mit großen Volumina herstellen lassen, welche eine gleichmäßige Wandstärke über das gesamte Formteil aufweisen. Die Verarbeitbarkeit gegenüber PA-Formmassen, die nicht aus recycliertem Material bestehen, ist wesentlich verbessert (Fließfähigkeit), wobei die mechanischen Eigenschaften der Formkörper nur gering beeinträchtigt sind. Als Anwendungen seien Kraftstoff-, Schmiermittel- oder Bremsflüssigkeitsbehälter im KFZ genannt sowie Wärmedämmstege für Alu-Fenster- u. Fassadenprofile.

### Beispiele

### Beispiel 1V

Auf einem Zweiwellenextruder (ZSK 53 von Werner & Pfleiderer) wurden bei 270°C, 40 kg/h Gesamtdurchsatz und einer Drehzahl von 250 U/min
76,5 Gew.-% Polyamid 6 (VZ in 96 % Schwefelsäure: 184 ml/g, Ultramid® B35 der BASF AG)
20 Gew.-% Glasfaser (Schnittfaser 4,5 mm Länge, 10 µm Filamentdurchmesser, Aminosilan-Schlichte
1,5 Gew.-% eines mit 6 % Acrylsäure gepfropftes Polypropylens mit Schubmodul = 185 MPa (Polybond® 1009 von BP Chemicals Ltd.)
1,0 Gew.-% eines CuI-Batches in Polycaprolactam (Cu-Gehalt in der Gesamtmischung 100 ppm)
konfektioniert, wobei die Glasfasern in die Schmelze der übrigen Komponenten dosiert wurde. Die Mischung wurde verstrangt, im Wasser abgekühlt, granuliert und 12 h bei 80°C im Vakuum getrocknet. Anschließend wurde das Produkt in einem Taumeltrockner unter N₂-Atmosphäre bei 190°C auf eine Viskositätszahl von ca. 275 ml/g in fester Phase nachkondensiert, wobei die Temperzeit bei 12 h lag.

Mit einer Extrusionsblasformmaschine Bekum BAE 5 (genutete Einzugszone) wurden bei 242°C Vierkantflaschen 400 x 80 x 80 mm geblasen. Das Werkzeug war auf 40°C temperiert und wurde mit Schließhubkalibrierung gefahren, der Blasdruck betrugt 4,5 bar. Die Teile wogen ca. 400 g. Je 4 cm unterhalb bzw. oberhalb des Bodens bzw. Deckels des Hohlkörpers wurde die Wandstärke gemessen. Ziel war eine möglichst gleichmäßige Wandstärke über die Länge des Hohlkörpers (d oben, d unten)

### Beispiel 2a (erfindungsgemäß)

### Die Blasteile aus Beispiel 1:

96,5 Gew.-% Komponente A
(Polyamid-6-Recyclat mit VZ von 265 ml/g und 20 % Glasfasern),
1,5 Gew.-% Komponente B
(Polypropylenhomopolymer mit 6 Gew.-% Acrylsäure gepfropft (bezogen auf B), Polyband® 1009),
1,0 Gew.-% Komponente F/1
(20 %iger Ruß-Batch in Poly-ε-caprolactam)
1,0 Gew.-% Komponente F/2
(CuI Batch, 1,5 Gew.-% Cu in Poly-ε-caprolactam); Cu Gesamtgehalt in der Formmasse 100 ppm)
wurden mit einer Kugelmühle unter Trockeneis-Kühlung auf eine mittlere Korngröße von ca. 3 mm gemahlen, 16 h bei 80°C im Vakuum getrocknet und erneut wie in Beispiel 1 konfektioniert und ohne Nachkondensation zu Blasformkörpern verarbeitet.

### Beispiel 2b + c (erfindungsgemäß)

mit den Teilen von Beispiel 2a wurde derselbe Verarbeitungszyklus noch 1x bzw. 2x (Beispiel 2c) wiederholt.

### Beispiel 2d (erfindungsgemäß)

wie Beispiel 2c, aber nach dem Trocknen (vor dem Verarbeiten) zu Blasformkörpern wurde das Granulat 3 h bei 190°C unter Stickstoffatmosphäre nachgetempert und zu Blasformkörpern verarbeitet.

### Beispiel 3a (erfindungsgemäß)

60 Gew.-% glasfaserverstärktes Polyamid 6 - Recyclat (35,6 % Glasfasern mit 232 µm Länge und 10 µm Durchmesser, 0,3 % Zn-Stearat, 112 ppm Cu als CuI-Wärmestabilisator, 0,2 % Ruß, VZ 146 ml/g) wurde mit 1,5 % Komponente B und 38,5 % gemahlenen Spritzteilen aus unverstärkten Polyamid-Recyclaten mit verschiedenen Aufbau- und Viskositätszahlen (Komponente C) gemischt, gemahlen (Korngröße: ca. 3 mm) und auf einem Zweiwellenextruder bei 270°C konfektioniert. Konfektionierbedingungen und Weiterverarbeitung war wie in Beispiel 1V. Der Gesamtglasfasergehalt betrug 21,4 %.

### Beispiel 3b (erfindungsgemäß)

Das glasfaserverstärkte Polyamid-6-Granulat (Zusammensetzung siehe Beispiel 3a) wurde zuerst zu Stäben 120x10x6,4 mm verspritzt. Diese wurden in einer Kugelmühle auf eine Korngröße von ca. 3 mm gemahlen, 16 h bei 80°C getrocknet und anschließend wie in Beispiel 3a weiterverarbeitet.

### Beispiel 4 (nicht erfindungsgemäß)

Polyamid 6 (wie in Beispiel 1) wurde mit 12 Gew.-% Glasfaser (wie in Beispiel 1), 25 Gew.-% des glasfaserverstärkten Polyamid 6-Granulats aus Beispiel 3a und 1,5 Gew.-% Komponente B) gemischt und auf einem Zweiwellenextruder bei 270°C konfektioniert. Bedingungen und Weiterverarbeitung waren wie in Beispiel 1. Der Gesamtglasfasergehalt betrug 20,9 Gew.-%, davon waren 57 Gew.-% (bezogen auf Gesamtglasfasergehalt) aus frischer Glasfaser eingebracht.

### Meßmethoden

Viskositätszahl VZ: gemäß DIN 53727 an 0,5 %iger Lösung in 96 %iger Schwefelsäure (an Granulat) MVI: gemäß DIN 53735 bei 250°C/10 kg Belastung (an Granulat) Zug-E-Modul: gemäß DIN 53457 (an bei 280°C hergestellten Schulterstäben)
Faserlängenverteilung: Eine 10 g-Probe wurde bei 600°C 10 min verascht, der Rückstand in Silikonöl aufgenommen und von der Emulsion 1 Tropfen auf einen Objektträger gebracht und mit 20facher Vergrößerung fotografiert. Auf den Bildern wurden 500 Fasern mit Hilfe eines Digitalisiertabletts von Hand ausgezählt und davon der arithmetrische Mittelwert der Faserlängen bestimmt. Den Bildrand berührende Fasern wurden ignoriert.

Der Glasfasergehalt wurde durch Auswiegen des Veraschungsrückstandes bestimmt.

Die Ergebnisse der Messungen sind der Tabelle zu entnehmen.

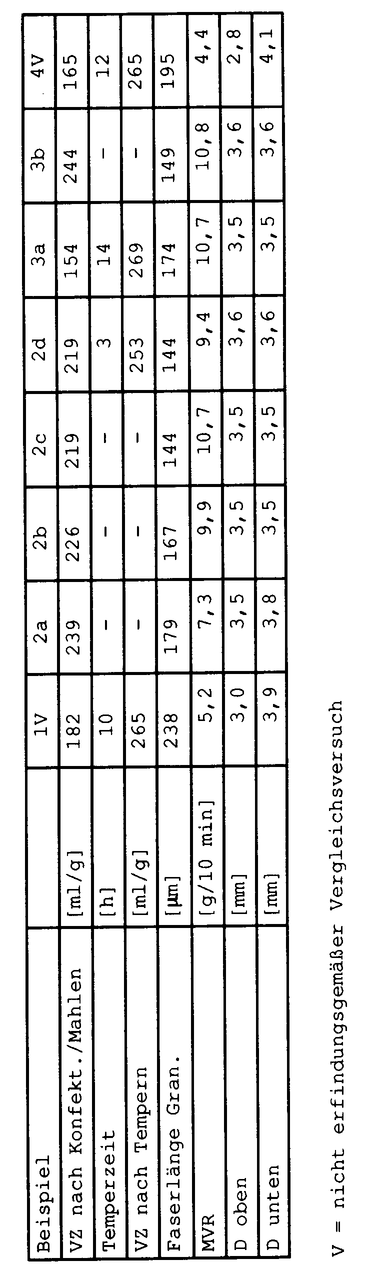

## Patentansprüche

1. Thermoplastische Formmassen, enthaltend
A) 40 bis 99,9 Gew.-% eines faserverstärkten Polyamid-6-Recyclats mit einer Viskositätszahl ≧ 200 ml/g
B) 0,1 bis 5 Gew.-% eines Olefinpolymerisates, aufgebaut aus
b₁) 40 - 99,8 Gew.-% mindestens eines α-Olefins mit 2 - 8 C-Atomen,
b₂) 0,2 - 20 Gew.-% einer ethylenisch ungesättigten Mono- oder Dicarbonsäure oder einem funktionellen Derivat einer solchen Säure,
C) 0 bis 50 Gew.-% eines unverstärkten Polyamid-Recyclats
D) 0 bis 50 Gew.-% eines nicht-recyclisierten Polyamids
E) 0 - 10 Gew.-% eines nicht-recyclierten faserförmigen Füllstoffes
F) 0 - 30 Gew.-% üblicher Zusatzstoffe und Verarbeitungshilsmittel,
wobei die Gewichtsprozente der Komponenten A) bis F) sich zu 100 % ergänzen, mit der Maßgabe, daß der Fasergehalt der Formmassen insgesamt 10 bis 50 Gew.-%, bezogen auf A) bis F), beträgt und maximal 1/5 des Fasergehaltes der Formmassen A) bis F) aus nicht-recycliertem Füllstoff E) besteht.

2. Thermoplastische Formmassen nach Anspruch 1, in denen der faserförmige Füllstoff der Komponente A) eine Faserlänge von < 180 µm (arithmetisches Mittel) aufweist.

3. Thermoplastische Formmassen nach den Ansprüchen 1 oder 2, in denen der faserförmige Füllstoff der Komponente A) aus Glasfasern besteht.

4. Thermoplastische Formmassen nach den Ansprüchen 1 bis 3, in denen die Komponente A) eine Viskositätszahl von ≧ 220 ml/g aufweist.

5. Thermoplastische Formmassen nach den Ansprüchen 1 bis 4, in denen die Komponente D) im Ethylen-Acrylsäurecopolymer oder -pfropfpolymer oder ein mit Maleinsäureanhydrid gepfropftes Polypropylenhomopolymer oder Ethylen-Propylencopolymer ist.

6. Verfahren zur Herstellung der thermoplastischen Formmassen gemäß den Ansprüchen 1 bis 4, dadurch gekennzeichnet, daß man die Komponente A) sowie gegebenenfalls C) und D) auf eine Partikelgröße von 1 bis 10 mm zerkleinert und die Komponente B) sowie gegebenenfalls C) der Schmelze der Komponente A) sowie gegebenenfalls F) zugibt und anschließend diese Mischung in üblicher Weise konfektioniert und granuliert.

7. Verfahren nach Anspruch 6, dadurch gekennzeichnet, daß diese Mischungen anschließend in fester Phase nachkondensiert werden.

8. Verfahren nach Anspruch 7, dadurch gekennzeichnet, daß man bei Temperaturen von 5 bis 50°C unterhalb des Schmelzpunktes der reinen Komponente A) unter Inertgasbedingungen über einen Zeitraum von 0,5 bis 50 Stunden die Mischungen thermisch nachbehandelt.

9. Verfahren nach den Ansprüchen 7 und 8, dadurch gekennzeichnet, daß das Polyamid nach der Nachkondensation in fester Phase eine Viskositätszahl von mindestens 250 ml/g aufweist.

10. Verwendung der thermoplastischen Formmassen gemäß den Ansprüchen 1 bis 5 oder erhältlich gemäß dem Verfahren gemäß den Ansprüchen 6 bis 9 zur Herstellung von Formkörpern durch Blasformen, Profilextrusion und/oder Rohrextrusion.

11. Blasformkörper, erhältlich aus den thermoplastischen Formmassen gemäß den Ansprüchen 1 bis 5.

12. Profilextrudate, erhältlich aus den thermoplastischen Formmassen gemäß den Ansprüchen 1 bis 5.

13. Rohrextrudate, erhältlich aus den thermoplastischen Formmassen gemäß den Ansprüchen 1 bis 5.
